# EUROPEAN PATENT SPECIFICATION

(11) **EP 4 035 835 B1**
(45) Date of publication and mention of the grant of the patent: **04.09.2024**
(21) Application number: 21217034.4
(22) Date of filing: 22.12.2021
(51) Int. Cl.: B25B 27/30

(54) **ANCHORING DEVICE FOR SPRING-DAMPER ASSEMBLIES FOR MACHINES FOR MOUNTING/REMOVING VEHICLE SUSPENSIONS**
VERANKERUNGSVORRICHTUNG FÜR FEDER-DÄMPFER-ANORDNUNGEN FÜR MASCHINEN ZUR MONTAGE/DEMONTAGE VON FAHRZEUGAUFHÄNGUNGEN
DISPOSITIF D'ANCRAGE POUR ENSEMBLES RESSORT-AMORTISSEUR POUR MACHINES DE MONTAGE/EXTRACTION DE SUSPENSIONS DE VÉHICULES

(30) Priority: 28.01.2021 IT 202100001688
(43) Date of publication of application: 03.08.2022
(73) Proprietor: Govoni S.r.l., 40014 Crevalcore (BO) (IT)
(72) Inventor: VERRILLO, Davide, 41051 CASTELNUOVO RANGONE MO (IT); VERRILLO, Antonio, 40017 SAN GIOVANNI IN PERSICETO BO (IT); MITRATI, Marco, 40017 SAN GIOVANNI IN PERSICETO BO (IT)
(74) Representative: Modiano, Micaela Nadia

(56) References cited:
- EP-A2- 1 900 483
- TW-A- 201 006 709
- US-B1- 6 470 554

## Description

The present invention relates to an anchoring device for spring-damper assemblies for machines for mounting/removing vehicle suspensions. An anchoring device according to the preamble of claim 1 is know from US6470554B1.

In the field of car repair shop work for the maintenance of vehicles it is known to have to work on their suspensions, for example in order to replace the shock absorber.

Once the spring-damper assembly has been disassembled from the vehicle, it is necessary to compress the spring in order to release the shock absorber and remove it from its seat, then insert a new one and finally release the spring to restore the original configuration of the assembly and be able to mount it back on the vehicle.

The spring generally rests in a lower region on an annular plate which is integral with the shock absorber jacket and is provided in an upper region with an abutment element for the last turn, called cap, to which the free end of the movable stem of the shock absorber is connected. During the removal step, the abutment element is disengaged from the shock absorber stem so that the spring can be moved independently.

Such abutment element can have different shapes and is generally provided with an annular flange in which there are holes for the insertion of threaded elements for connection to the vehicle chassis which can have different dimensions and positions.

In order to perform the operations described above, both manual and automatically actuated equipment is known.

The automatic equipment of the known type, called coil spring compressors, are essentially constituted by a frame which supports in a lower region a spring supporting assembly and in an upper region an assembly for the compression/release of said spring and means for actuating with an alternating translational motion in a vertical direction the supporting assembly or the compression/release assembly with respect to each other, in order to obtain a gradual compression of the spring during the removal step and a subsequent gradual release thereof after the replacement or repair of the shock absorber. Said actuation means usually comprise a pneumatic cylinder.

In particular, machines are known in which the actuation means are associated with the compression/release assembly, while the supporting assembly remains at a fixed level, except for any adjustments of the initial position.

The compression/release assembly provides generally a pair of adjustable vices adapted to be arranged on the wire of one of the first of the complete upper turns of the spring.

In a first version of the coil spring compressor said vices can be associated with a grip assembly provided with suitable adjustments of the relative position of the vices which is associated with the movable stem of the actuation cylinder, as described in EPA 18410791A2.

In other versions of the coil spring compressor the vices can be associated with respective supporting arms connected to a crossmember associated so as it can slide along a pair of vertical guides provided in the frame of the machine. There are various adjustments of the spatial position of the vices in order to be able to adapt to various types of shock absorbers.

However, for some applications the upper end of the spring must be coupled temporarily to the compression/release assembly by means of the corresponding cap, without gripping directly the last turn thereof.

Various accessories to be mounted on the coil spring compressor are known for this purpose.

For example, plates are known which are conveniently shaped to be coupled to the cap of a specific model of suspension and must be mounted on the machine in each instance. This solution evidently entails the need for the operators to equip themselves with a certain number of differently shaped plates, to be used as needed.

In order to try to make the use of these accessories more flexible, some solutions have been developed which allow limited adaptations in the configuration for use as the type of suspension on which one must work changes.

For example, rigid plates are known which are provided with a plurality of holes distributed thereon for the insertion of threaded elements for connection to the cap of the suspension to be mounted/removed, which must engage in the holes provided in said cap placed below said plate.

Obviously, the rigidity of this solution limits its flexibility of use, since the plate, based on the positioning of the corresponding holes, is suitable to be used only with preset types of suspensions.

Furthermore, this solution is mainly designed to be used on coil spring compressors in which the actuation cylinder is associated with the lower supporting assembly of the spring and the upper compression/release assembly remains fixed.

Again, an accessory is known from EP 2671683A1 which is adapted to be associated with the vices supported by an upper compression/release assembly connected to the actuation cylinder as described above.

However, this solution also has limited possibilities of adjustment to adapt to the different shapes of the suspension caps on which it is necessary to intervene.

In fact, such accessory is essentially constituted by a plate adapted to be clamped to the arms of the machine, which is provided in a lower region with a first plurality of holes adapted to be arranged at respective holes of the cap of the suspension on which it is necessary to work. Said plate is provided with a central opening in which a ring, provided in turn with a second plurality of holes, can be coupled so that it can rotate about an axis at right angles to the arrangement of said plate. Said ring can be rotated through a certain angle with respect to the plate so as to arrange its own holes at the respective holes of the cap of the suspension if it is not possible to align them directly with those of the plate.

These solutions of the known type are not free from drawbacks, which include the fact that they have limited flexibility of use if the type of suspension to be removed and remounted varies, with particular reference to the spatial orientation thereof.

The aim of the present invention is to eliminate the drawbacks mentioned above of the background art by devising an anchoring device for spring-damper assemblies for machines for mounting/removing vehicle suspensions which can be adapted to the different shapes and positions of the suspension on the coil spring compressor.

Within this aim, an object of the present invention is to make the operations required of the operators, as the type of suspension on which they must work changes, faster and easier.

Another object of the present invention is to have a structure that is simple, relatively easy to provide in practice, safe in use, effective in operation, and relatively low-cost.

This aim and these objects are all achieved by the present anchoring device for spring-damper assemblies for machines for mounting/removing vehicle suspensions according to what is stated in the following claim 1 and optionally provided with one or more of the characteristics stated in the dependent claims.

Further characteristics and advantages of the present invention will become more apparent from the detailed description of a preferred but not exclusive embodiment of an anchoring device for spring-damper assemblies for machines for mounting/removing vehicle suspensions, illustrated by way of non-limiting example in the accompanying drawings, wherein:

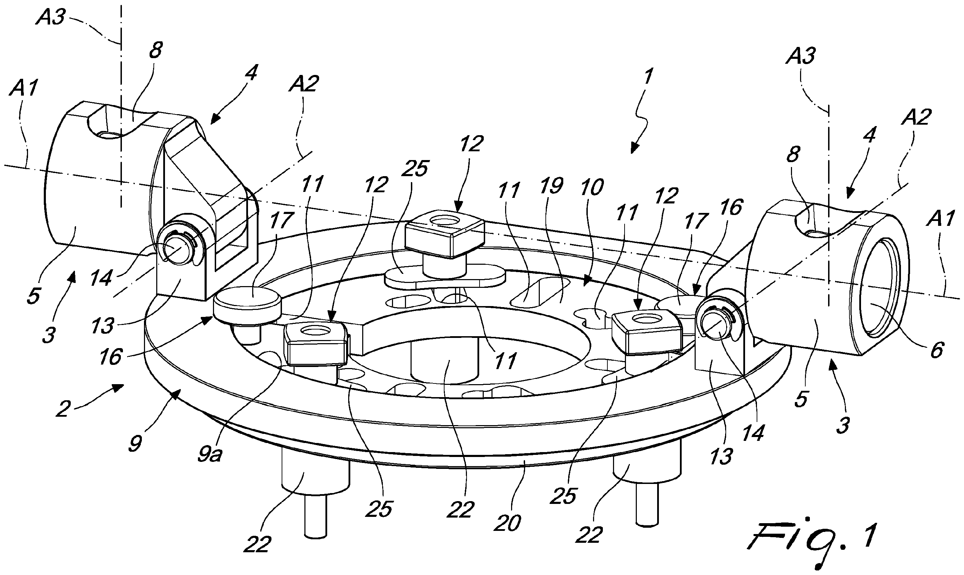

Figure 1 is a perspective view of an anchoring device for spring-damper assemblies for machines for mounting/removing vehicle suspensions according to the invention;

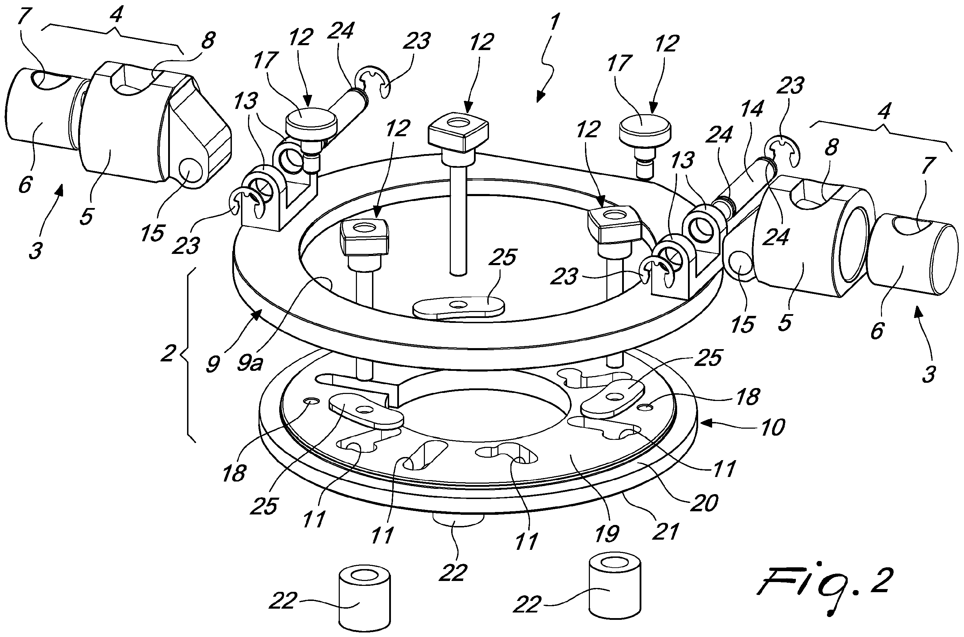

Figure 2 is an exploded perspective view of the device of Figure 1;

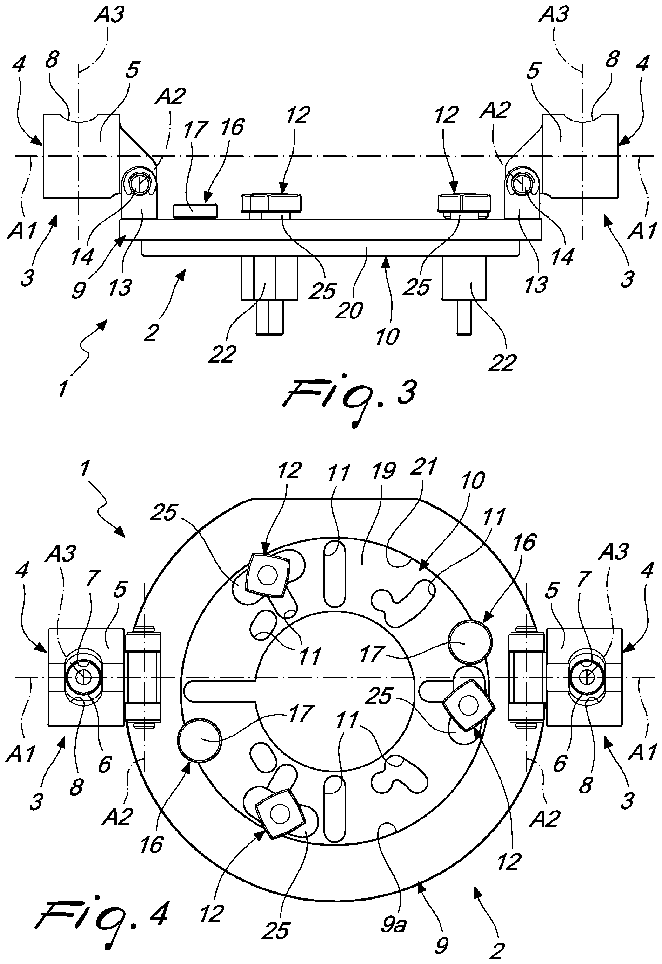

Figure 3 is a front elevation view of the device of Figure 1;
Figure 4 is a top plan view of the device of Figure 1;
Figure 5 is a front elevation view of a coil spring compressor in which the device according to the invention is mounted, applied to a suspension in a first configuration of use;
Figures 5a and 5b are front elevation views of the device according to the invention shown in Figure 5 in different conditions of operation;
Figure 6 is a top plan view of the machine of Figure 5;
Figure 7 is a lateral elevation view of a portion of the machine of Figure 5;
Figures 7a and 7b are lateral elevation views of the device according to the invention shown in Figure 7, in different conditions of operation;
Figure 8 is a front elevation view of the device according to the invention applied to a suspension in a second configuration of use.

With reference to the figures, an anchoring device for spring-damper assemblies for machines for mounting/removing vehicle suspensions is generally designated by the reference numeral 1.

The device 1 is designed, during use, to be applied to a conventional machine 100 for the mounting/removing of vehicle suspensions.

Such suspensions essentially consist of a spring-damper assembly G constituted by a helical spring M the turns of which are wound around the movable stem of a shock absorber A and which is interposed between a plate P, which is integral with the external jacket of said shock absorber, and an abutment element R associated with the movable stem.

The machine 100 is of the type comprising a frame 101 for supporting a lower assembly 102 for the support of the spring/damper assembly and an upper assembly 103 for the compression/release of the spring M which comprises a crossmember 104 which supports a pair of orientable arms 105 and can move with an alternating translational motion along two substantially vertical guides 106 associated with the frame 101.

In the present description, the term "substantially" is understood to mean except for the usual machining and assembly tolerances of the component parts.

The arms 105 are supported by the crossmember 104 and are associated so as they can rotate about the guides 106 so as to be able to modify their orientation and therefore the distance of the corresponding ends.

The crossmember 104 is associated with play with the guides 106, according to a constructive method known to the person skilled in the art, so as to be able to vary its own inclination with respect to them by a predefined maximum angle, so as to allow the machine 1 to adapt to different positions of the spring-damper assembly G.

The arms 105 are provided with pins 108 which protrude in a lower region from the corresponding ends for connection to traditional vices or to other accessories for the anchoring of the upper part of the spring M of the spring-damper assembly G on which it is necessary to work.

The machine 1 provides actuation means 107 for the movement, with an alternating translational motion, of the crossmember 104, which are conventionally constituted by a pneumatic cylinder the stem of which is associated with said crossmember and the jacket of which is supported by the frame 101.

The shape and operation of the machine 1 are not described in detail since they are known to the person skilled in the art.

The device 1 comprises a coupling assembly 2 which can be associated with the upper abutment element R of the spring M of the spring-damper assembly G and means 3 for temporary or reversible connection to the arms 105 of the machine 1.

The device 1 is adapted to be applied to the machine 1 by connecting it to the arms 105 in case one has to work on spring-damper assemblies G that entail compressing/releasing the spring M by means of the corresponding upper abutment element R, replacing conventional vices or other dedicated accessories of the known type.

Such connection means 3 provide a joint 4 which can be associated in a reversible manner with each one of the arms 105 by means of the corresponding pin 108, which are provided with two degrees of freedom in rotation about respective rotation axes which are substantially mutually perpendicular.

Each joint 4 comprises a bushing 5 which is extended along a first axis A1 and is associated with the coupling assembly 2 so that it can rotate about a second axis A2 that is substantially perpendicular to the first axis A1 and not coplanar with respect to it, and a cylinder 6 inserted within the bushing 5 and provided with a seat 7 for the insertion of the pin 108 of the corresponding arm 105. The seat 7 is extended along a third axis A3 which is substantially perpendicular to the first and second axes A1 and A2. The bushing 5 is provided with an elongated slot 8 so as to allow an arc of relative rotation between the bushing 5 and the cylinder 6 about the first axis A1.

During use, the device 1 is arranged so that the first and the second axes A1 and A2 are substantially horizontal and the third axis A3 is substantially vertical.

The first axes A1 of the two joints 4 are substantially mutually parallel. During use, when the joints 4 are arranged at the same level, the corresponding first axes A1 are aligned. The second axes A2 of the joints 4 are substantially mutually parallel.

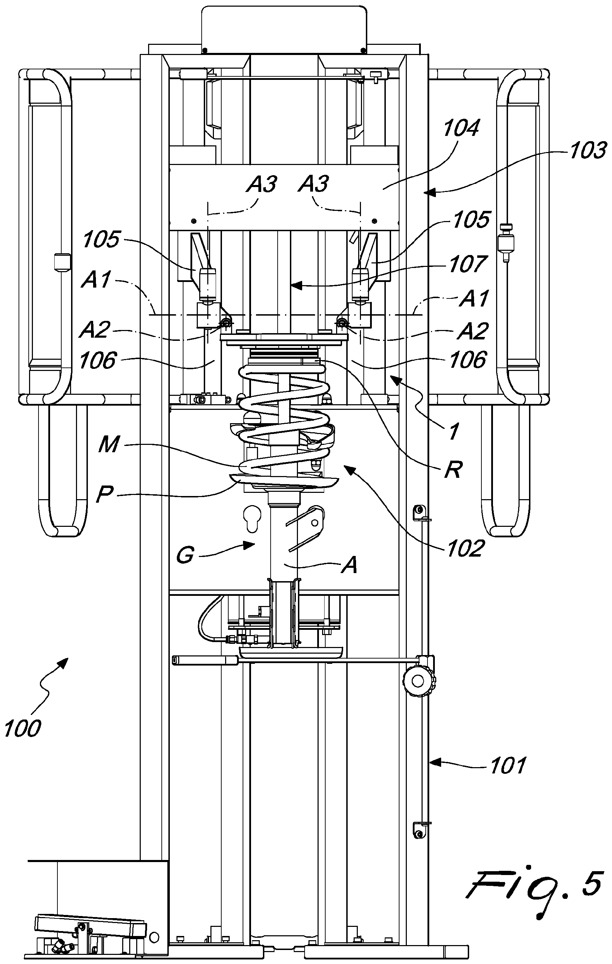

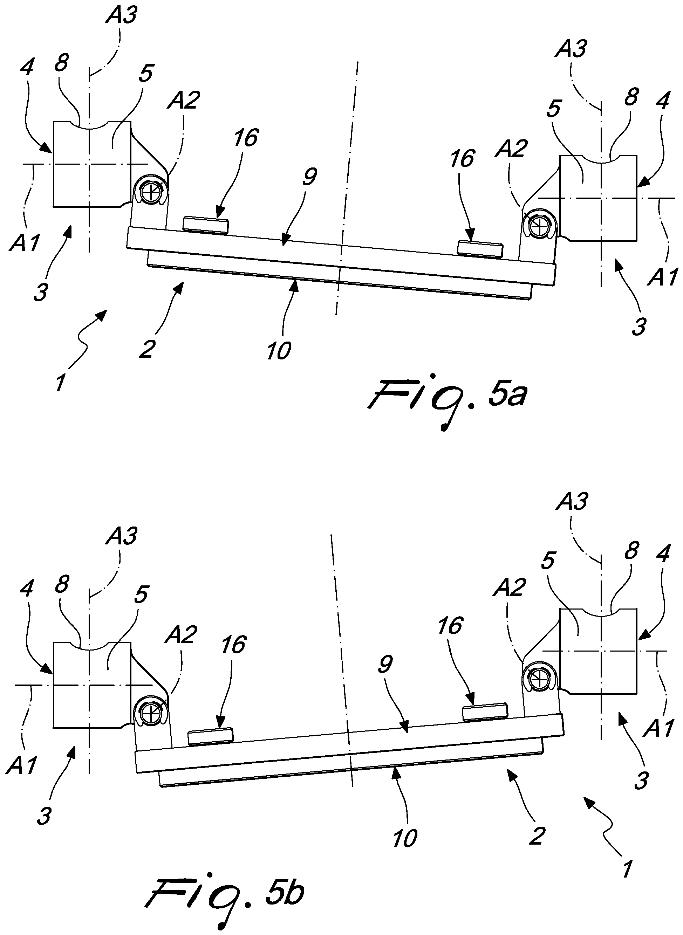

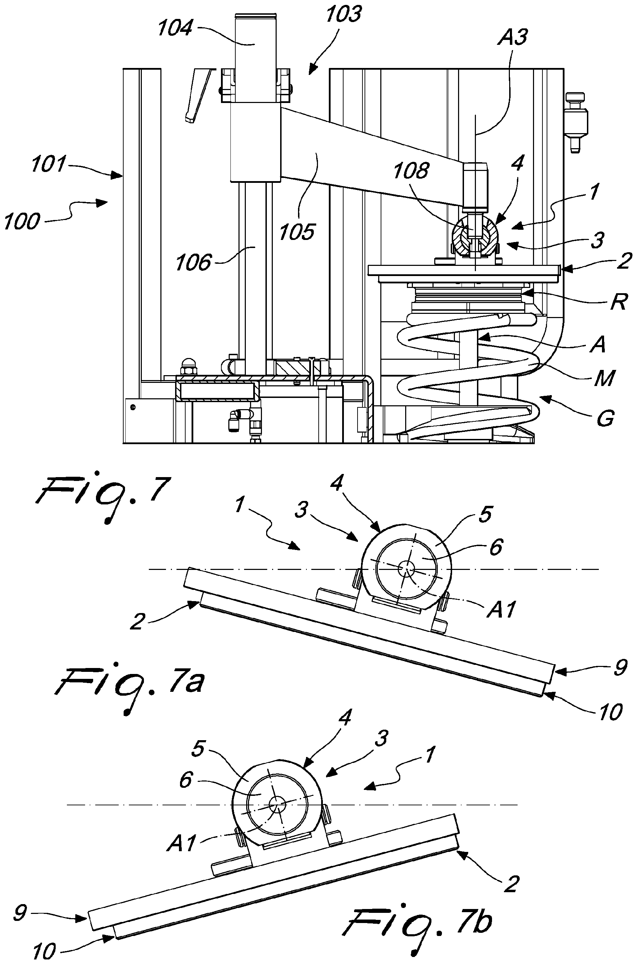

When the device 1 is mounted on the machine 100 the joints 4 allow, therefore, the coupling assembly 2 to modify its own orientation by means of a rotation about the first axes A1 (Figures 7, 7a, 7b) and/or by means of a rotation about the second axes A2 (Figures 5, 5a and 5b) to adapt to different shapes and arrangements of the spring-damper assembly G and of the corresponding upper abutment element R.

When, during use, a rotation of the coupling assembly 2 about the second axes A2 is necessary, the coupling with play of the crossmember 104 to the guides 106 makes it possible to compensate for the consequent misalignment in the vertical direction of the joints 4 and of the corresponding arms 105.

Furthermore, the coupling assembly 2 comprises an annular flange 9 which is hinged to the bushings 5 and a coupling plate 10 associated rotatably within said flange. The coupling plate 10 also has an annular shape.

The coupling plate 10 has a plurality of openings 11, which are variously shaped and distributed thereon. The openings 11 pass through the thickness of the coupling plate 10 so as to allow the selective insertion of threaded elements 12 for connection to the abutment element R of the spring-damper assembly G on which it is necessary to work.

By manually turning the coupling plate 10 with respect to the flange 9 it is possible to position some of the openings 11 at the holes usually provided on the abutment element R in order to be able to insert the threaded elements 12 so as to render the device 1 integral, by means of the coupling plate 10, with said abutment element R and allow the compression/release of the spring M in safe conditions.

The geometry and arrangement of the individual openings 11 on the coupling plate 10 are such as to optimize the flexibility of use of the device 1 as the type of spring-damper assembly G on which it is necessary to work varies.

The flange 9 is provided in diametrically opposite positions with two pairs of eyes 13 for the insertion of respective pivots 14 arranged along the second axes A2 and passing through corresponding holes 15 formed in the bushings 5. Each pivot 14 is locked axially by elastic rings 23 engaged in annular grooves 24, adapted to abut on opposite sides of the eyes 13.

In this manner each joint 4 is articulated to the flange 9 about the respective second axis A2.

Means 16 are also provided for temporarily locking the angular position of the coupling plate 10 with respect to the flange 9.

Such temporary locking means 16 can provide, for example, one or more, preferably two, threaded knobs 17 adapted to engage in corresponding threaded holes 18 provided in diametrically opposite parts of the coupling plate 10 in order to be clamped against the flange 9 to prevent the relative rotation of said plate with respect to it.

In greater detail, the coupling plate 10 is provided with an internal band 19, in which the openings 11 are distributed, and with a lowered external band 20, between the internal band 19 and the external band 20 there being an annular profile 21 coupled slidingly to the internal edge 9a of the flange 9. The internal band 19 protrudes inside the annular flange 9 and the external band 20 abuts below said flange.

The internal band 19 of the coupling plate 10 remains recessed within the flange 9.

Furthermore, the device 1 comprises spacers 22 adapted to be associated with the threaded elements 12 and to be interposed between the coupling plate 10 and the abutment element R in order to allow a stable anchoring thereof regardless of the shape of said element.

Such spacers 22 are provided with a through hole to fit them along the stem of the threaded elements 12.

Between the head of the threaded elements 12 and the internal band 19 there are preferably washers 25 having an elongated shape in order to ensure a stable connection.

In the embodiment shown there are three threaded elements 12, with corresponding washers 25, adapted to be inserted in respective openings 11 selected from those provided on the internal band 19 of the coupling plate 10 as a function of the type of spring-damper assembly G on which it is necessary to work.

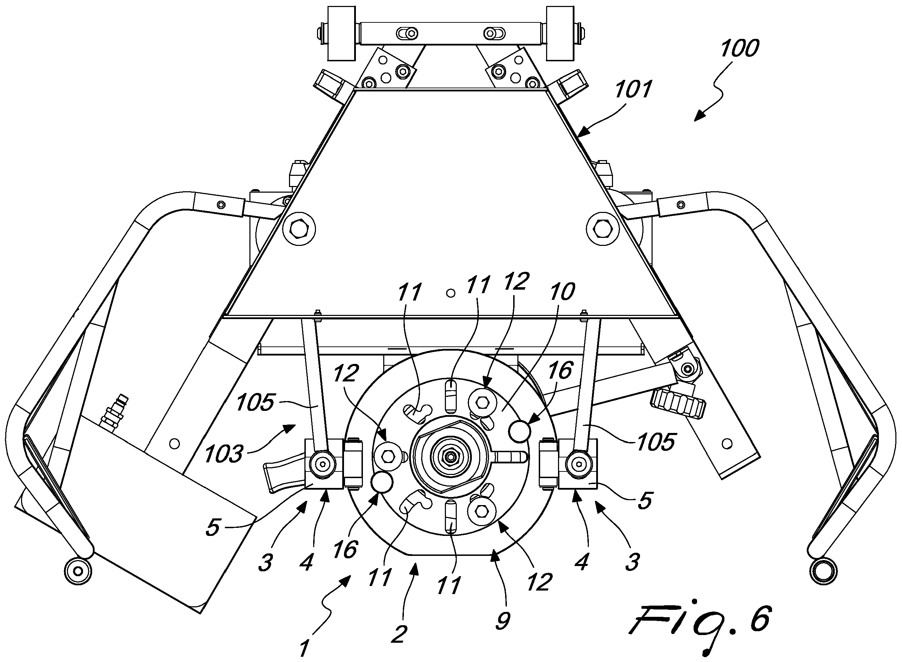

Figures 5-7b show a machine 100 of the type described above in which the device 1 is applied to a spring-damper assembly G in a first configuration of use which does not provide for the use of the spacers 22 and of the washers 25.

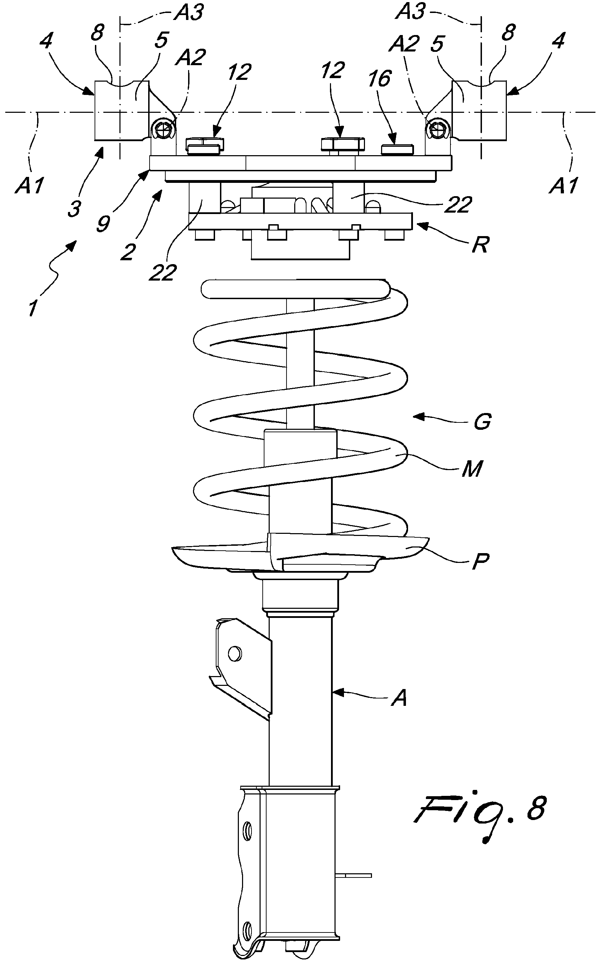

In Figure 8, the device 1 is applied to a different spring-damper assembly G which instead requires the use of spacers 22 and washers 25.

In practice it has been found that the described invention achieves the intended aim and objects and in particular it is pointed out that the device according to the invention, due to the different arrangements of the coupling assembly allowed by the particular means for connecting to the machine that are used, makes it possible to work on a broad range of spring-damper assemblies in optimum safety conditions.

The shape of the coupling assembly, with the possibility to orient the coupling plate with respect to the flange and the variety of openings present on said plate, increases further the flexibility of use of the device according to the invention.

The invention thus conceived is susceptible of numerous modifications and variations, all of which are within the scope of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An anchoring device (1) for spring-damper assemblies for machines for mounting/removing vehicle suspensions, machine (100) of the type comprising a frame (101) for supporting a lower assembly (102) for the support of the spring/damper assembly (G) and an upper assembly (103) for the compression/release of the spring (M) which comprises a crossmember (104) which supports a pair of orientable arms (105) which can move with an alternating translational motion along at least two substantially vertical guides (106) associated with the frame (101), said device (1) comprising a coupling assembly (2) which can be associated with an upper abutment element (R) of the spring (M) of the spring-damper assembly (G) and means (3) for connecting said coupling assembly (2) to said arms (105), said connection means (3) comprising a pair of joints (4) each of which can be associated with each one of said arms (105) and is provided with two degrees of freedom in rotation about respective rotation axes (A1, A2) which are mutually substantially perpendicular, **characterized in that** each one of said joints (4) comprises a bushing (5) which is extended along a first axis (A1) and is associated with said coupling assembly (2) so that it can rotate about a second axis (A2) that is substantially perpendicular to said first axis (A1), a cylinder (6) accommodated within said bushing (5) and provided with a seat (7) for the insertion of a pin (108) for fixing to the respective arm (105), the seat (7) being extended along a third axis (A3) that is substantially perpendicular to the first and second axes (A1, A2) and the bushing (5) being provided with an elongated slot (8) so as to allow an arc of relative rotation between the bushing (5) and the cylinder (6) about said first axis (A1).

2. The device (1) according to claim 1, **characterized in that** the first axes (A1) of said two joints (4) are arranged substantially parallel to each other.

3. The device (1) according to one or more of the preceding claims, **characterized in that** said coupling assembly (2) comprises an annular flange (9) associated with said bushings (5) and a coupling plate (10) associated rotatably within said flange (9), the coupling plate (10) being provided with a plurality of openings (11) for the selective insertion of threaded elements (12) for connection to the abutment element (R) of the spring-damper assembly (G).

4. The device (1) according to claim 3, **characterized in that** it comprises means (16) for temporarily locking the angular position of said coupling plate (10) with respect to said flange (9).

5. The device (1) according to claim 3, **characterized in that** said coupling plate (10) is provided with an internal band (19) in which said openings (11) are distributed and with a lowered external band (20), an annular profile (21) being formed between the internal band (19) and the external band (20) and being coupled slidingly with the internal edge (9a) of said flange (9), the internal band (19) protruding inside the flange (9) and the external band (20) abutting below said flange.

6. The device (1) according to claim 3, **characterized in that** it comprises spacers (22) adapted to be associated with said threaded elements (12) and to be interposed between the coupling plate (10) and the abutment element (R) of the spring-damper assembly (G).

7. A machine (100) for mounting/removing vehicle suspensions, comprising a frame (101) for supporting a lower assembly (102) for supporting the spring-damper assembly (G) and an upper assembly (103) for the compression/release of the spring (M) which comprises a crossmember (104) which supports a pair of orientable arms (105) and can move with an alternating translational motion along two substantially vertical guides (106) associated with said frame (101), the crossmember (104) being associated with play with said guides (106) so as to be able to vary its arrangement with respect to them, **characterized in that** it comprises a device (1) according to one or more of claims 1-6 having the corresponding joints (4) associated with said arms (105).

## Patentansprüche

1. Eine Verankerungsvorrichtung (1) für Feder-Dämpfer-Anordnungen für Maschinen zur Montage/Demontage von Fahrzeugaufhängungen, Maschine (100) von der Art, die einen Rahmen (101) zum Tragen eines unteren Aufbaus (102) zum Tragen der Feder-Dämpfer-Anordnung (G) und eines oberen Aufbaus (103) für die Kompression/das Loslassen der Feder (M) umfasst, der einen Querträger (104) umfasst, welcher ein Paar ausrichtbarer Arme (105) trägt, die sich mit einer alternierenden Translationsbewegung entlang mindestens zwei im Wesentlichen vertikalen mit dem Rahmen (101) verbundenen Führungen (106) bewegen können; wobei die Vorrichtung (1) einen Kopplungsaufbau (2) umfasst, der mit einem oberen Widerlagerelement (R) der Feder (M) der Feder-Dämpfer-Anordnung (G) verbunden werden kann, und Mittel (3) zum Verbinden des Kopplungsaufbaus (2) mit den Armen (105); wobei die Verbindungsmittel (3) ein Paar von Gelenken (4) umfassen, die jeweils mit jedem der Arme (105) verbunden werden können und mit zwei Freiheitsgraden in der Drehung um entsprechende Rotationsachsen (A1, A2) ausgestattet sind, die im Wesentlichen senkrecht zueinander sind; **dadurch gekennzeichnet, dass** jedes der Gelenke (4) eine Buchse (5) umfasst, die sich entlang einer ersten Achse (A1) erstreckt und so mit dem Kopplungsaufbau (2) verbunden ist, dass sie sich um eine zweite Achse (A2) drehen kann, die im Wesentlichen senkrecht zu der ersten Achse (A1) ist; wobei ein Zylinder (6) in die Buchse (5) aufgenommen und mit einem Sitz (7) zum Einführen eines Stifts (108) zur Befestigung an dem jeweiligen Arm (105) ausgestattet ist; wobei der Sitz (7) sich entlang einer dritten Achse (A3) erstreckt, die im Wesentlichen senkrecht zu den ersten und zweiten Achsen (A1, A2) ist, und wobei die Buchse (5) mit einem Längsschlitz (8) versehen ist, um einen Bogen relativer Drehung zwischen der Buchse (5) und dem Zylinder (6) um die erste Achse (A1) zu ermöglichen.

2. Die Vorrichtung (1) gemäß Anspruch 1, **dadurch gekennzeichnet, dass** die ersten Achsen (A1) der beiden Gelenke (4) im Wesentlichen parallel zueinander angeordnet sind.

3. Die Vorrichtung (1) gemäß einem oder mehreren der obigen Ansprüche, **dadurch gekennzeichnet, dass** der Kopplungsaufbau (2) einen mit den Buchsen (5) verbundenen Ringflansch (9) und eine Kopplungsplatte (10) umfasst, die drehbar innerhalb des Flanschs (9) angeschlossen ist, wobei die Kopplungsplatte (10) mit einer Vielzahl von Öffnungen (11) zum selektiven Einsetzen von Gewindeelementen (12) für die Verbindung mit dem Widerlagerelement (R) der Feder-Dämpfer-Anordnung (G) ausgestattet ist.

4. Die Vorrichtung (1) gemäß Anspruch 3, **dadurch gekennzeichnet, dass** sie Mittel (16) zur vorübergehenden Arretierung der Winkelposition der Kopplungsplatte (10) im Verhältnis zu dem Flansch (9) umfasst.

5. Die Vorrichtung (1) gemäß Anspruch 3, **dadurch gekennzeichnet, dass** die Kopplungsplatte (10) mit einem inneren Ring (19) versehen ist, in dem die Öffnungen (11) verteilt sind, und mit einem abgesenkten äußeren Ring (20), wobei ein Ringprofil (21) zwischen dem inneren Ring (19) und dem äußeren Ring (20) geformt und gleitend mit dem inneren Rand (9a) des Flanschs (9) gekoppelt ist; wobei der innere Ring (19) in den Flansch (9) vorsteht und der äußere Ring (20) unterhalb des Flanschs anliegt.

6. Die Vorrichtung (1) gemäß Anspruch 3, **dadurch gekennzeichnet, dass** sie Abstandselemente (22) umfasst, ausgebildet, um mit den Gewindeelementen (12) verbunden und zwischen der Kopplungsplatte (10) und dem Widerlagerelement (R) der Feder-Dämpfer-Anordnung (G) angeordnet zu werden.

7. Eine Maschine (100) zur Montage/Demontage von Fahrzeugaufhängungen, die einen Rahmen (101) zum Tragen eines unteren Aufbaus (102) zum Tragen der Feder-Dämpfer-Anordnung (G) und eines oberen Aufbaus (103) für die Kompression/das Loslassen der Feder (M) umfasst, der einen Querträger (104) umfasst, welcher ein Paar ausrichtbarer Arme (105) trägt und sich mit einer alternierenden Translationsbewegung entlang zwei im Wesentlichen vertikalen mit dem Rahmen (101) verbundenen Führungen (106) bewegen kann, wobei der Querträger (104) mit Spiel mit den Führungen (106) verbunden ist, um seine Anordnung mit Bezug auf dieselben verändern zu können; **dadurch gekennzeichnet, dass** sie eine Vorrichtung (1) gemäß einem oder mehreren der Ansprüche 1-6 umfasst, in der die entsprechenden Gelenke (4) mit den Armen (105) verbunden sind.

## Revendications

1. Dispositif d'ancrage (1) pour des ensembles ressort-amortisseur pour machines de montage/extraction de suspensions de véhicule, machine (100) du type comprenant un châssis (101) pour supporter un ensemble inférieur (102) pour le support de l'ensemble ressort/amortisseur (G) et un ensemble supérieur (103) pour la compression/le relâchement du ressort (M) qui comprend une traverse (104) qui supporte une paire de bras orientables (105) qui peuvent se déplacer avec un mouvement de translation alterné le long d'au moins deux guides (106) sensiblement verticaux associés au châssis (101), ledit dispositif (1) comprenant un ensemble d'accouplement (2) qui peut être associé à un élément de butée supérieur (R) du ressort (M) de l'ensemble ressort-amortisseur (G) et des moyens (3) pour relier ledit ensemble d'accouplement (2) auxdits bras (105), lesdits moyens de liaison (3) comprenant une paire d'articulations (4) dont chacune peut être associée à chacun desdits bras (105) et est dotée de deux degrés de liberté en rotation autour d'axes de rotation (A1, A2) respectifs qui sont mutuellement sensiblement perpendiculaires, **caractérisé en ce que** chacune desdites articulations (4) comprend une bague (5) qui est étendue le long d'un premier axe (A1) et est associée audit ensemble d'accouplement (2) de sorte qu'elle peut tourner autour d'un deuxième axe (A2) qui est sensiblement perpendiculaire audit premier axe (A1), un cylindre (6) logé à l'intérieur de ladite bague (5) et doté d'un siège (7) pour l'insertion d'une tige (108) pour la fixation au bras (105) respectif, le siège (7) étant étendu le long d'un troisième axe (A3) qui est sensiblement perpendiculaire au premier et deuxième axes (A1, A2) et la bague (5) étant dotée d'une fente allongée (8) de sorte à permettre un arc de rotation relative entre la bague (5) et le cylindre (6) autour dudit premier axe (A1).

2. Dispositif (1) selon la revendication 1, **caractérisé en ce que** les premiers axes (A1) desdites deux articulations (4) sont agencés sensiblement parallèlement l'un à l'autre.

3. Dispositif (1) selon une ou plusieurs des revendications précédentes, **caractérisé en ce que** ledit ensemble d'accouplement (2) comprend une bride annulaire (9) associée auxdites bagues (5) et une plaque d'accouplement (10) associée de manière rotative à l'intérieur de ladite bride (9), la plaque d'accouplement (10) étant dotée d'une pluralité d'ouvertures (11) pour l'insertion sélective d'éléments filetés (12) pour la liaison à l'élément de butée (R) de l'ensemble ressort-amortisseur (G).

4. Dispositif (1) selon la revendication 3, **caractérisé en ce qu'**il comprend des moyens (16) pour verrouiller temporairement la position angulaire de ladite plaque d'accouplement (10) par rapport à ladite bride (9).

5. Dispositif (1) selon la revendication 3, **caractérisé en ce que** ladite plaque d'accouplement (10) est dotée d'une bande interne (19) dans laquelle lesdites ouvertures (11) sont réparties et d'une bande externe abaissée (20), un profilé annulaire (21) étant formé entre la bande interne (19) et la bande externe (20) et étant accouplé de manière coulissante avec le bord interne (9a) de ladite bride (9), la bande interne (19) faisant saillie à l'intérieur de la bride (9) et la bande externe (20) venant en butée en dessous de ladite bride.

6. Dispositif (1) selon la revendication 3, **caractérisé en ce qu'**il comprend des entretoises (22) adaptées pour être associées auxdits éléments filetés (12) et pour être intercalées entre la plaque d'accouplement (10) et l'élément de butée (R) de l'ensemble ressort-amortisseur (G).

7. Machine (100) de montage/extraction de suspensions de véhicule, comprenant un châssis (101) pour supporter un ensemble inférieur (102) pour supporter l'ensemble ressort-amortisseur (G) et un ensemble supérieur (103) pour la compression/le relâchement du ressort (M) qui comprend une traverse (104) qui supporte une paire de bras orientables (105) et peut se déplacer avec un mouvement de translation alterné le long de deux guides (106) sensiblement verticaux associés audit châssis (101), la traverse (104) étant associée au jeu avec lesdits guides (106) de sorte à pouvoir faire varier son agencement par rapport à eux, **caractérisé en ce qu'**il comprend un dispositif (1) selon une ou plusieurs des revendications 1 à 6 ayant les articulations (4) correspondantes associées auxdits bras (105).
